# EUROPÄISCHE PATENTSCHRIFT

(11) **EP 0 685 056 B1**
(45) Veröffentlichungstag und Bekanntmachung des Hinweises auf die Patenterteilung: **13.08.1997**
(21) Anmeldenummer: 94908939.5
(22) Anmeldetag: 23.02.1994
(51) Int. Cl.: F24J 2/07, F24J 2/28

(54) **EMPFÄNGER ZUM UMSETZEN KONZENTRIERTER SONNENSTRAHLUNG**
RECEIVER FOR CONVERTING CONCENTRATED SOLAR RADIATION
RECEPTEUR POUR LA CONVERSION D'UN RAYONNEMENT SOLAIRE CONCENTRE

(30) Priorität: 24.02.1993 DE 4305668
(43) Veröffentlichungstag der Anmeldung: 06.12.1995
(73) Patentinhaber: L. & C. Steinmüller GmbH, D-51641 Gummersbach (DE)
(72) Erfinder: Schmitz-Goeb, Manfred, D-51643 Gummersbach (DE); Graf, Roland, D-91741 Theilenhofen (DE)
(74) Vertreter: Carstens, Wilhelm, Dipl.-Phys.
(86) Internationale Anmeldenummer: DE9400187
(87) Internationale Veröffentlichungsnummer: WO9419652

(56) Entgegenhaltungen:
- EP-A- 0 124 769
- CH-A- 669 837
- DE-A- 2 629 086
- DE-A- 4 024 216
- US-A- 3 875 925

## Beschreibung

Die Erfindung betrifft einen Hochtemperatur-Empfänger zum Umsetzen konzentrierter Sonnenstrahlung mit einem Kanal, einer im Kanaleingang angeordneten und der konzentrierten Sonnenstrahlung ausgesetzten Absorberstruktur aus einem luftdurchlässigen faserartigen Mattenmaterial und Mitteln, die Luft als Kühlmedium durch die Absorberstruktur in Richtung der einfallenden Sonnenstrahlung hindurchfördern, und mit einem flächigen luftdurchlässigen Tragelement für die Absorberstruktur.

Aus der EP 124 769 B1 ist ein Hochtemperatur-Empfänger bekannt, bei den über dem Kanalquerschnitt neben auf Abstand angeordneten Drähten auch Metallgestrickmatten vorgesehen sind, die der Absorption der eingestrahlten konzentrierten Sonnenenergie dienen. Die Drähte sind an ihrem oberen Ende an der Kanalwand befestigt und an ihrem unteren Ende tragen sie nach Art eines Massependels je ein zylinderförmiges Gewichtsstück. Bei der Ausführungsform gemäß FIG. 7 der EP 124 769 B1 besteht die Absorberstruktur aus hängenden Drähten und Metallgestrickmatten. Zur Anpassung an den nicht über den Kanalquerschnitt konstanten Verlauf der Strahlungsdichte sind über den Kanalquerschnitt verteilt Drosselmittel so angeordnet, daß in Bereichen größerer Strahlungsdichte größere Luftmengenströme auftreten als in Bereichen geringerer Strahlungsdichte. Dabei kann in bevorzugter Weise als Drosselmittel ein flächiges luftdurchlässiges Drosselmittel eingesetzt werden.

Das luftdurchlässige faserartige Material sollte eine möglichst lockere Form besitzen, damit die einfallende Sonnenstrahlung in die Tiefe der Matte eindringen kann und dort absorbiert werden kann. Andererseits bedarf es zur sicheren Halterung und Positionierung des Mattenmaterials im Kanalquerschnitt einer gewissen Dichte.

Aus der DE-A-26 29 086 ist ein Niedertemperatur-Sonnenstrahlungskollektor bekannt, bei dem das Absorptionsvermögen einer Absorberstruktur aus Gewebe von der einer Abdeckplatte.zugekehrten Oberfläche zum Inneren der Absorberschicht mit zunehmender Eindringtiefe der Sonnenstrahlen ansteigt und vorzugsweise in der Mitte der Schichtdicke der Absorberschicht am größten ist. Damit soll an der sonnenseitigen Oberfläche der Absorberstruktur eine geringere Strahlungsabsorption und Wärmeerzeugung eintreten und hierdurch Wärmeverluste an die Umgebung herabgesetzt werden. Die Gewebestruktur ist zwischen der Abdeckplatte und einer Bodenplatte gehalten und wird in Längsrichtung im wesentlichen parallel zu den Platten von Luft durchströmt.

Aus der CH-A-669 837 ist ein gattungsgemäßer Hochtemperatur-Empfänger mit Luft als Kühlmedium bekannt, bei dem auf einem flächigen luftdurchlässigen Tragelement Drahtgeweberinge bzw. spiralartig aufgewickelte Drahtgewebestreifen zwischen auf dem Tragelement befestigten Stegen eingeklemmt sind. Die Drahtgeweberinge bzw. -streifen weisen in Strömungsrichtung der Luft gesehen eine konstante Dichte auf. Der Klemmengriff macht zusätzliche Bauteile erforderlich und fordert ein hohes federelastisches Verhalten des Drahtgewebes.

Es ist die Aufgabe der vorliegenden Erfindung, einen Empfänger der genannten Art anzugeben, bei dem das Material zum einen in der beschriebenen Weise die Sonnenstrahlung absorbiert und zum anderen sicher im Kanal gehalten werden kann.

Diese Aufgabe wird dadurch gelöst, daß das Mattenmaterial in einem in Strömungsrichtung der Luft gesehen vorderen Bereich eine niedrigere Dichte zur günstigen Absorption der Sonnenstrahlung und auf der dem Tragelement zugewandten Seite eine höhere Dichte zur sicheren Befestigung an dem Tragelement aufweist.

Die Luft wird in Richtung der einfallenden Sonnenstrahlung durch das Mattenmaterial gefördert. Bei der erfindungsgemäßen Ausgestaltung des Empfängers bleibt also im in Strömungsrichtung der Luft gesehen vorderen Bereich eine niedrigere Dichte, d.h. eine vorgegebene Lockerheit, um dort in günstiger Weise die Sonnenstrahlung zu absorbieren, während auf der von der Einfallseite abgewandten Seite eine höhere Dichte vorgegeben ist, die eine sichere Halterung und Positionierung des Mattenmateriales in dem Kanal ermöglicht. Unter einem faserartigen Mattenmaterial wird in der nachfolgenden Beschreibung und in den Ansprüchen ein Material verstanden, das insbesondere nach verschiedenen aus der Textiltechnik bekannten Verfahren erstellt werden kann. Der Begriff Mattenmaterial umfaßt daher z.B. Gespinste, Gewebe, Gestricke und Vliese.

Auf dem Gebiet der Solartechnik sind derartige faserartige Mattenmaterialien bereits bekannt. Es wird hier insbesondere auf die FIG. 5-9 der FR-PS 2 491 599 und die zugehörige Beschreibung verwiesen. Dort ist z.B. Flechtwerk und Strickwerk dargestellt. Insoweit wird die Offenbarung der FR-PS 2 491 599 auch zum Gegenstand der Offenbarung der vorliegenden Anmeldung gemacht. Als Materialien für die Fasern eignen sich insbesondere hochtemperaturbeständige Metalle. Es ist aber auch denkbar, Fasern bzw. Fäden aus Keramikmaterial einzusetzen.

Das Mattenmaterial kann eine stetig anwachsende Dichte oder eine sprungartig anwachsende Dichte aufweisen. Eine sprungartig anwachsende Dichte kann z.B. in zweckmäßiger Weise dadurch erreicht werden, daß zwei Matten unterschiedlicher Dichte in Übereinanderlage im Kanal abgestützt sind. Die beiden Matten müssen durch geeignete Verbindungsmaßnahmen in Übereinanderlage gehalten werden.

Es ist jedoch auch möglich, daß die Matte aus mindestens einem Abschnitt eines Strumpfes, vorzugsweise Metallstrickstrumpfes, besteht, der in Umfangsrichtung gesehen über mindestens zwei vorgegebene Umfangsbereiche mit unterschiedlicher Dichte hergestellt ist und der flächig derart zusammengedrückt ist, daß der Umfangsbereich geringster Dichte direkt der einfallenden Sonnenstrahlung ausgesetzt ist.

Die Matte kann aus einer Vielzahl von derartigen Strumpfabschnitten zusammengesetzt sein. Es ist jedoch in bevorzugter Weise vorgesehen, daß die Matte aus einem im zusammengedrückten Zustand aufgewickelten Strumpf besteht. Der Wickel kann rundspiralartig, eckigspiralartig, mäanderförmig oder dergleichen aufgewickelt sein. Wenn die Empfangsfläche sehr groß ist und/oder die Matte keine ausreichende Eigenfestigkeit aufweist, ist es zweckmäßig, die Matte auf einem flächigen luftdurchlässigen Träger zu befestigen.

Es erscheint jedoch technisch sinnvoll, daß die Matte aus einer Vielzahl von Einzelmatten besteht und jeder Einzelmatte ein gesondertes Tragelement zugeordnet ist derart, daß Einzelmatte und Tragelement in ihrer Vielzahl den Kanalquerschnitt abdecken. Hierbei ist es wiederum zweckmäßig, daß die Außenkontur der auf dem Tragelement befestigten Einzelmatte jeweils an die Außenkontur des Tragelementes im wesentlichen angepaßt ist. Der Kanalquerschnitt läßt sich in besonders einfacher Weise abdecken, wenn die Tragelemente eine hexagonale, salmiakpastillenartige oder rechteckige Form aufweisen.

Einfache Tragelemente erreicht man, wenn das Tragelement als Lochplatte oder Gitterwerk ausgestaltet ist. In der EP 124 769 B1 sind zwar gemäß FIG. 4 auch Lochplatten vorgesehen. Diese dienen jedoch alleine als Drosselmittel und nicht gleichzeitig als Träger für die Absorberstruktur.

Zu einer einfachen Abstützung der Absorberstruktur im Kanal gelangt man, wenn jedes Tragelement über mindestens einen Abstandshalter an einer stromab in dem Kanal angeordneten Tragkonstruktion befestigt ist.

Um eine besonders gute Verbindung zu erzielen, wird die Einzelmatte flächig mit dem flächigen Tragelement verbunden, z.B. verlötet.

Bei Verwendung einer Vielzahl von über den Kanalquerschnitt verteilten Lochplatten weisen die Lochplatten im Bereich größerer Strahlungsdichte einen größeren freien Querschnitt auf als die im Bereich geringerer Strahlungsdichte angeordneten Lochplatten. Eine solche unterschiedliche Drosselung ist auch bei den Lochblechen gemäß FIG. 4 der EP 124 769 vorgesehen, die jedoch nicht als Träger für die Absorberstruktur eingesetzt sind.

Die Erfindung soll nun anhand der beigefügten Figuren näher erläutert werden. Es zeigen:
- FIG. 1: eine Teilaufsicht auf eine erfindungsgemäße Absorberstruktur, bei der eine Vielzahl von Einzelmatten mit zugeordneten Tragelementen vorgesehen sind,
- FIG. 2: einen Querschnitt durch einen Schlauch bzw. Strumpf im geöffneten Zustand,
- FIG. 3: mehrere Strümpfe gemäß FIG. 2 im zusammengedrückten Zustand,
- FIG. 4: einen Teilschnitt durch den Empfänger zur Erläuterung der Befestigung des einzelnen Tragelementes und
- FIG. 5: einen schematischen Schnitt durch eine Absorberstruktur, bei der zwei Matten unterschiedlicher Dichte in Übereinanderlage benutzt werden.

Die Absorberstruktur 1 besteht aus einer Vielzahl von Tragelementen 2 mit hexagonaler Kontur. Die Tragelemente sind mit einer Vielzahl von Löchern 3 versehen, die als kreisrunde Öffnungen, Schlitze oder dergleichen ausgebildet sein können. Die Tragelemente sind in hexagonal dichter Anordnung mittels Abstandshalter 4 an einer Tragkonstruktion 5 befestigt, die ihrerseits mit der Kanalwandung 6 verbunden ist. Der Querschnitt des Kanales 6 entspricht in üblicher Weise dem Gesamtquerschnitt der Absorberstruktur und kann in Strömungsrichtung der durch den Absorber geförderten Luft L gesehen mit Abstand von der Absorberstruktur mit einem Boden versehen sein. Die so gebildete Kammer kann mit einem zu den Fördermitteln führenden Kanal kleineren Durchmessers versehen sein.

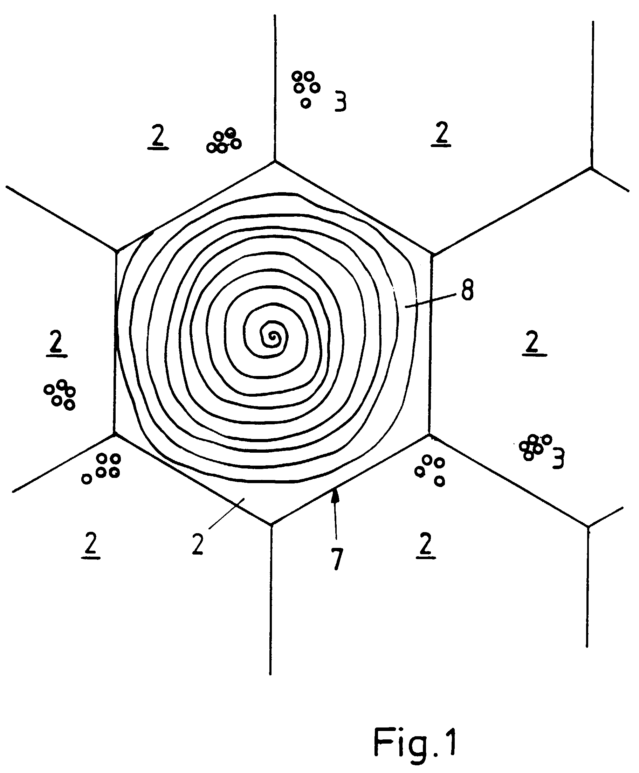

In der FIG. 1 ist auf dem mittigen Tragelement eine Matte in Form eines Spiralwickels 7 aus einem Metallstrickstrumpf befestigt, wobei die Außenkontur des Wickels so verformt wird, daß sie mit den auf den anderen Tragelementen befestigten, jedoch nicht in der FIG. 1 dargestellten Wickeln in Anlage kommt und die Gesamtfläche der Tragelemente 2 mit den von den Wickeln 7 gebildeten Matten überdeckt ist.

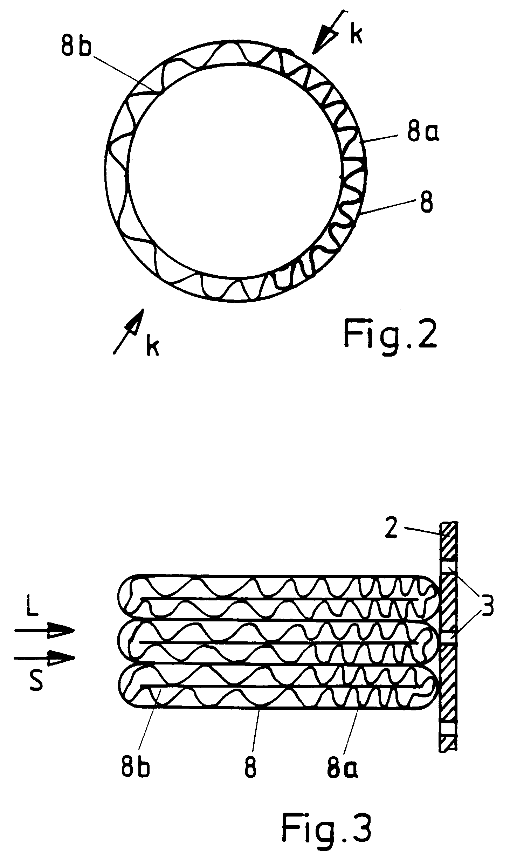

In der FIG. 2 ist schematisch ein Querschnitt des gemäß FIG. 1 spiralförmig aufgewickelten Strumpfes 8 dargestellt. Längs eines Umfangsbereiches 8a von ca. 120° weist der Strumpf eine größere Dichte als längs des gegenüberliegenden Umfangsbereiches 8b auf. Der Einfachheit halber sind in der FIG. 2 die unterschiedlichen Dichten durch Wellenlinien unterschiedlicher Wellenlänge dargestellt.

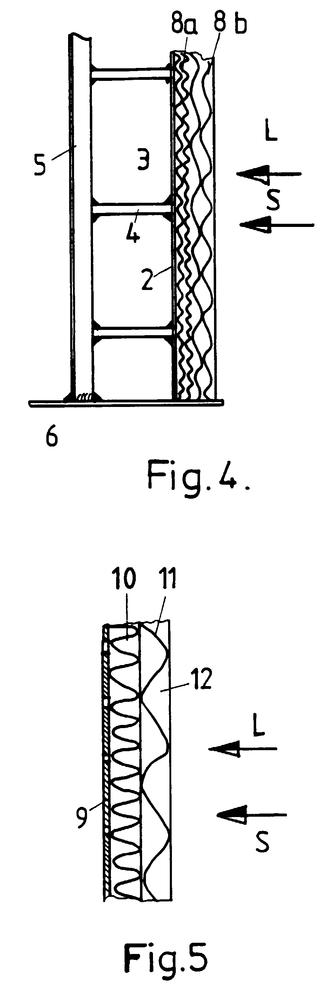

Wenn ein derartig gestrickter Strumpf 8 in Richtung der Kräfte K gemäß FIG. 2 zusammengedrückt wird, erhält man im wesentlichen ein Band gemäß FIG. 3, bei dem die Hälften des Teilbereiches 8a und die Hälften des Teilbereiches 8b aneinander anliegen. Dieses Band wird - wie in FIG. 3 angedeutet - zu dem in der FIG. 1 dargestellten Wickel 7 aufgewickelt und der Wickel wird mit der Anlage des Bereiches 8a an dem Tragelement 2 auf dem Tragelement befestigt, z.B. verlötet. Auf diese Weise tritt die in der FIG. 1 von oben und in der FIG. 3 von links einfallende Sonnenstrahlung zunächst in einen Materialbereich geringerer Dichte ein, so daß die gewünschte Absorption erfolgt, während der Bereich höherer Dichte der Befestigung an der Tragplatte dient und zugleich auch noch bis in diese Tiefe vordringende Strahlung absorbiert. Es ist selbstverständlich, daß die Bereiche nicht unbedingt jeweils 120° betragen müssen. Wenn z.B. der Bereich 8a im zusammengefalteten Zustand gemäß FIG. 3 eine geringere Breite aufweisen soll, ist es auch möglich, Strümpfe mit mehr als zwei unterschiedlichen Dichtebereichen zu stricken. Zur Vereinfachung sind in der FIG. 4 nur die unterschiedlichen Dichtebereiche 8a und 8b dargestellt, nicht jedoch die einzelnen Windungen der Wicklung.

Bei der Ausführungsform gemäß FIG. 5 werden auf einem Träger 9 in Übereinanderlage zwei Matten 10 und 11 angeordnet, von denen die der Strahlung S zugewandte Matte eine geringere Dichte aufweist als die an dem Träger 9 anliegende Matte 10. Auch hier ist der Einfachheit halber die unterschiedliche Dichte durch eine Wellenlinie unterschiedlicher Wellenlänge dargestellt.

Wie auch bei der Ausführungsform gemäß FIG. 1 und 4 kann bei der Ausführungsform gemäß FIG. 5 anstelle einer den gesamten Querschnitt des Kanales abdeckenden Mattenbaugruppe eine Konstruktion mit Einzelmatten und einzelnen Tragelementen (Modulbauweise) vorgesehen werden, wenn dies bei größeren Empfängerflächen zum Aufbau einer stabilen Absorberstruktur erforderlich ist. Andererseits kann anstelle einer modulartigen Ausführungsform, wie sie bei den FIG. 1 bis 4 beschrieben ist, auch bei gewissen Empfängergrößen ein einziger Strumpfabschnitt insgesamt aufgewickelt werden.

## Patentansprüche

1. Hochtemperatur-Empfänger zum Umsetzen konzentrierter Sonnenstrahlung mit einem Kanal, einer im Kanaleingang angeordneten und der konzentrierten Sonnenstrahlung ausgesetzten Absorberstruktur (1) aus einem luftdurchlässigen faserartigen Mattenmaterial (7; 10, 11) und Mitteln, die Luft als Kühlmedium durch die Absorberstruktur in Richtung der einfallenden Sonnenstrahlung hindurchfördern, und mit einem flächigen luftdurchlässigen Tragelement (2; 9) für die Absorberstruktur (1),
**dadurch gekennzeichnet**,
daß das Mattenmaterial (7; 10, 11) in einem in Strömungsrichtung der Luft gesehen vorderen Bereich eine niedrigere Dichte zur günstigen Absorption der Sonnenstrahlung und auf der dem Tragelement (2; 9) zugewandten Seite eine höhere Dichte zur sicheren Befestigung an dem Tragelement (2; 9) aufweist.

2. Hochtemperatur-Empfänger nach Anspruch 1,
**dadurch gekennzeichnet**,
daß das Mattenmaterial (7) eine stetig anwachsende Dichte aufweist.

3. Hochtemperatur-Empfänger nach Anspruch 1,
**dadurch gekennzeichnet**,
daß das Mattenmaterial (10, 11) eine sprungartig anwachsende Dichte aufweist.

4. Hochtemperatur-Empfänger nach Anspruch 1 oder 3,
**dadurch gekennzeichnet**,
daß zwei Matten (10, 11) unterschiedlicher Dichte in Übereinanderlage im Kanal abgestützt sind.

5. Hochtemperatur-Empfänger nach mindestens einem der Ansprüche 1 - 4,
**dadurch gekennzeichnet**,
daß die Matte (7) aus mindestens einem Abschnitt eines Strumpfes (8), vorzugsweise Metallstrickstrumpfes, besteht, der in Umfangsrichtung gesehen über mindestens zwei vorgegebene Umfangsbereiche (8a, 8b) mit unterschiedlicher Dichte hergestellt ist und der flächig derart zusammengedrückt ist, daß der Umfangsbereich (8b) geringster Dichte direkt der einfallenden Sonnenstrahlung (S) ausgesetzt ist.

6. Hochtemperatur-Empfänger nach Anspruch 5,
**dadurch gekennzeichnet**,
daß die Matte aus einer Vielzahl von Strumpfabschnitten zusammengesetzt ist.

7. Hochtemperatur-Empfänger nach Anspruch 5,
**dadurch gekennzeichnet,**
daß die Matte aus einem im zusammengedrückten Zustand aufgewickelten Strumpf (8) besteht.

8. Hochtemperatur-Empfänger nach mindestens einem der Ansprüche 1 - 7,
**dadurch gekennzeichnet**,
daß die Matte aus einer Vielzahl von Einzelmatten (7) besteht und jeder Einzelmatte ein gesondertes Tragelement (2) zugeordnet ist derart, daß Einzelmatte und Tragelement in ihrer Vielzahl den Kanalquerschnitt abdecken.

9. Hochtemperatur-Empfänger nach mindestens einem der Ansprüche 1 - 8,
**dadurch gekennzeichnet**,
daß die Außenkontur der auf dem Tragelement (2) befestigten Einzelmatte (7) jeweils an die Außenkontur des Tragelementes im wesentlichen angepaßt ist.

10. Hochtemperatur-Empfänger nach mindestens einem der Ansprüche 1 - 9,
**dadurch gekennzeichnet**,
daß das Tragelement als Lochplatte (2) oder Gitterwerk ausgestaltet ist.

11. Hochtemperatur-Empfänger nach mindestens einem der Ansprüche 1 - 10,
**dadurch gekennzeichnet**,
daß jedes Tragelement (2) über mindestens einen Abstandshalter (4) an einer stromab in dem Kanal (6) angeordneten Tragkonstruktion (5) befestigt ist.

12. Hochtemperatur-Empfänger nach mindestens einem der Ansprüche 1 - 11,
**dadurch gekennzeichnet**,
daß die Einzelmatte (7) flächig mit dem flächigen Tragelement (2) verbunden ist.

13. Hochtemperatur-Empfänger nach mindestens einem der Ansprüche 1 - 12,
**dadurch gekennzeichnet**,
daß bei einer Vielzahl von über den Kanalquerschnitt verteilten Lochplatten die Lochplatten im Bereich größerer Strahlungsdichte einen größeren freien Querschnitt aufweisen als die im Bereich geringerer Strahlungsdichte angeordneten Lochplatten.

## Claims

1. High-temperature receiver for converting concentrated solar radiation with a channel, an absorber structure (1) positioned in the channel inlet and exposed to the concentrated solar radiation and comprised of an fiber-like mat material (7; 10, 11) and means, which transport air as a cooling medium through the absorber structure in direction of the impinging solar radiation, and with an areal air-permeable support element (2; 9) for the absorber structure (1),
characterized in that the mat material (7; 10,11) has in a front area seen in the flow direction of the air a lower density for the favourable absorption of the solar radiation and on the side facing the support element (2; 9) a higher density providing for a secure fastening on that the support element (2; 9).

2. High-temperature receiver according to claim 1,
characterized in that the mat material has a continuously increasing density.

3. High-temperature receiver according to claim 1,
characterized in that the mat material (10, 11) has a density that increases stepwise.

4. High-temperature receiver according to claim 1 or 3,
characterized in that two mats (10, 11) of different density are supported one atop the other in the channel.

5. High-temperature receiver according to at least one of the claims 1 - 4,
characterized in that the mat (7) is comprised of at least one section of a stocking (8), preferably metal knit stocking, which is manufactered seen in circumferential direction over at least two predetermined circumferential portions (8a, 8b) of different density and which stocking is areally compressed such that the circumferential portion (8b) of a lowest density ist directly exposed to the impinging solar radiation (S).

6. High-temperature receiver according to claim 5,
characterized in that the mat is comprised of a plurality of stocking sections.

7. High-temperature receiver according to claim 5,
characterized in that the mat is comprised of a stocking (8) wound up in compressed state.

8. High-temperature receiver according to at least one of the claims 1 - 7,
characterized in that the mat is comprised of a plurality of individual mats (7) and each individual mat has coordinated therewith a separate support member (2) such that the individual mats and support members in their plurality cover the channel cross-section.

9. High-temperature receiver according to at least one of the claims 1 - 8,
characterized in that the outer contour of the individual mats (7) connected to the individual support members (2) is each substantially adapted to the respective outer contour of the support elements.

10. High-temperature receiver according to at least one of the claims 1 - 9,
characterized in that the support member is a perforated plate (2) or a grid structure.

11. High-temperature receiver according to at least one of the claims 1 - 10,
characterized in that each support member is fastened via at least one spacer (4) to a support structure (5) arranged within the channel (6).

12. High-temperature receiver according to at least one of the claims 1 - 11,
characterized in that the individual mat (7) is areally connected to the areal support member (2).

13. High-temperature receiver according to at least one of the claims 1 - 12,
characterized in that for a plurality of perforated plates distributed across the channel cross-section the perforated plates in the area of greater radiation density have a greater free cross-section than the perforated plates in the area of lower radiation density.

## Revendications

1. Capteur haute température pour la conversion d'un rayonnement solaire concentré, comportant un canal, une structure d'absorption (1) disposée dans l'entrée du canal et exposée au rayonnement solaire concentré, réalisée à partir d'un matériau en matelas de fibres (7; 10, 11) laissant passer l'air, et des moyens qui acheminent de l'air, constituant le fluide de refroidissement, à travers la structure d'absorption, dans le sens du rayonnement solaire incident, et comprenant un élément de support (2; 9) étendu plat, laissant passer l'air, supportant la structure d'absorption (1),
caractérisé en ce que le matériau (7; 10, 11) présente, dans une zone amont, vue dans le sens d'écoulement de l'air, une densité moindre permettant une meilleure absorption du rayonnement solaire, et, dans une zone orientée face à l'élément de support (2; 9), une densité plus forte permettant une fixation fiable sur l'élément de support (2; 9).

2. Capteur haute température selon la revendication 1, caractérisé en ce que le matériau en matelas (7) présente une densité qui croît progressivement.

3. Capteur haute température selon la revendication 1, caractérisé en ce que le matériau en matelas (10, 11) présente une densité qui croît par paliers.

4. Capteur haute température selon la revendication 1 ou 3, caractérisé en ce que deux matelas (10, 11) de densités différentes sont supportés en position de superposition dans le canal.

5. Capteur haute température selon l'une au moins des revendications 1 à 4, caractérisé en ce que le matelas (7) est constitué d'au moins une section d'un manchon (8), en particulier d'un manchon métallique tricoté, qui est fabriqué de manière à comporter, dans le sens de la circonférence, au moins deux zones périphériques prédéfinies (8a, 8b) présentant différentes densités, et qui est comprimé à plat de manière telle que la zone périphérique (8b) présentant la moindre densité soit directement exposée au rayonnement solaire incident (S).

6. Capteur haute température selon la revendication 5, caractérisé en ce que le matelas est assemblé à partir d'une multitude de sections de manchons.

7. Capteur haute température selon la revendication 5, caractérisé en ce que le matelas est constitué d'un manchon (8) enroulé à l'état aplati.

8. Capteur haute température selon l'une au moins des revendications 1 à 7, caractérisé en ce que le matelas est constitué d'une multitude de matelas individuels (7), et en ce que chaque matelas individuel est associé à un élément de support particulier (2), de manière telle que la multitude de matelas individuels et d'éléments de support couvre l'aire de section du canal.

9. Capteur haute température selon l'une au moins des revendications 1 à 8, caractérisé en ce que les contours extérieurs du matelas individuel (7) fixé sur l'élément de support (2) sont essentiellement adaptés aux contours extérieurs de l'élément de support respectif.

10. Capteur haute température selon l'une au moins des revendications 1 à 9, caractérisé en ce que l'élément de support est configuré sous forme d'une plaque perforée (2) ou d'une grille.

11. Capteur haute température selon l'une au moins des revendications 1 à 10, caractérisé en ce que chaque élément de support (2) est fixé par l'intermédiaire d'au moins un élément entretoise (4) dans une structure de support (5) disposée en aval à l'intérieur du canal (6).

12. Capteur haute température selon l'une au moins des revendications 1 à 11, caractérisé en ce que le matelas individuel (7) est relié sur toute sa surface à l'élément de support (2) étendu plat.

13. Capteur haute température selon l'une au moins des revendications 1 à 12, caractérisé en ce qu'avec une multitude de plaques perforées réparties sur l'aire de section du canal, les plaques perforées situées dans une zone à plus forte densité de rayonnement présentent une section ouverte plus importante que les plaques perforées situées dans une zone de moindre densité de rayonnement.
